# EUROPEAN PATENT APPLICATION

(11) **EP 4 382 403 A1**
(43) Date of publication of application: **12.06.2024**
(21) Application number: 22212421.6
(22) Date of filing: 09.12.2022
(51) Int. Cl.: B62K 19/40, B62H 5/20, B62J 43/28, B62J 43/30, B62J 11/00, B62J 45/00, B62K 19/34, B60R 25/33, G01S 19/16, G08G 1/00

(54) **TRACKER-AND-BATTERY-INTEGRATED STRUCTURE OF A BICYCLE**

(71) Applicant: Compositegear Taiwan Co., Ltd., New Taipei City 221011 (TW)
(72) Inventor: Chen, Jerry Han-Chieh, 221011 New Taipei City (TW)
(74) Representative: Cabinet Chaillot

(57) **Abstract**

A tracker (1) and battery (3) integrated structure of a bicycle has a holder (2) comprising an embedding seat (20) for the tracker (1) to be embedded and positioned, the bottom of the holder (2) configured with a combination device (21) for combining a battery (3), the holder (2) enabling the tracker (1) and the battery to (3) be integrated and embedded into the placing chamber (40) defined in the tube of the bicycle frame (4) and positioned, thereby integrating and installing hiddenly the tracker (1) and the battery (3) inside the tube of the bicycle frame (3) to avoid malicious damage. The configuration position will not affect the gravity center of the bicycle frame (4) and be capable of reducing the signal interference.

## Description

### BACKGROUND OF THE INVENTION

### Field of the Invention

The present invention is directed to a tracker and battery integrated structure of a bicycle, and more particularly, to a placing holder provided for supporting and fixing the tracker through utilizing a battery and installed hiding in the placing chamber reserved by the bicycle frame above the bottom bracket, thereby enabling the tracker and battery to be integrated and installed hiding inside the bicycle frame to avoid being damaged, and to maintain a stable and fixing position of the tracker. The configuration positions of the tracker and the battery are closed to the position of the center of gravity below the middle of the bicycle frame and good for the balance of the center of gravity of the bicycle frame. Moreover, installing the tracker above the battery can reduce the signal interference of the tracker and battery integrated structure of the bicycle.

### Description of the Related Art

For the purpose of conveniently finding or tracking the bike when the bicycle is stolen, the bicycle rider will install a tracker (such as AirTag by Apple Inc.) to find the position of the bicycle through APP. During application, when the bicycle rider fails to find the bicycle, APP can show and give the bicycle rider direction to the location thereof so that to achieve the effect of finding bicycle. However, the conventional trackers installed on the bicycles are mostly exposed outside the bicycle frame and the exposed tracker may lead to malicious damage. Moreover, not only the electric bicycles are configured with batteries but also the bicycles provided with lights are configured with batteries. Aa far as the conventional carbon fiber bicycle frame to be concerned, the main demand is lightweight. The battery and tracker configured on the bicycle frame have a weight, and if the position of which the battery and tracker configured on the bicycle frame deviates from the gravity center of the bicycle frame, the bicycle will incur unstable center of gravity and the riding will become unstable accordingly.

To overcome the above problems when the tracker is configured on the bicycle frame, the inventor tried new designs and developed the present invention.

### SUMMARY OF THE INVENTION

The primary objective of the present invention is to provide a tracker and battery integrated structure of a bicycle to integrate the tracker and the battery and install hiddenly them inside the frame tube to avoid malicious damage and the configuration position does not affect the gravity center of the bicycle frame and further reduce the signal interference of the tracker.

It's also a further primary objective of the present invention to provide a tracker and battery integrated structure of a bicycle, comprising a holder provided with an embedding seat for enabling the tracker to be embedded and positioned, a bottom end of the holder configured with a combination device to combine the battery, and through the holder, the tracker and the battery being integrated and embedded into a placing chamber installed inside the tube of the bicycle frame and positioned.

The primary feature of the present invention is related to the tracker installed above the battery, using the battery to support and fix the placing holder of the tracker and installed hiddenly inside the placing chamber reserved inside the frame tube above the bottom bracket, thereby enabling the tracker and battery to be integrated and installed hiddenly inside the bicycle frame to avoid malicious damage and the tracker having stable fixed position. The configuration position of the tracker and battery is above the bottom bracket and defined in the gravity center position below the middle of the bicycle frame and thus, the tracker and the battery will not affect the balance of the bicycle frame. Moreover, the tracker installed above the battery is subjected to reduce signal interference.

The technical means and structural design adopted by the present invention to fulfill the above objectives and functional effects are described in detail below with respect to the following embodiment and with reference to the accompanying drawings.

### BRIEF DESCRIPTION OF THE DRAWINGS

Fig. 1 shows the position of an embodiment of the present invention configured on the bicycle frame.
Fig. 2 is an enlarged view of the bottom bracket in Fig. 1.
Fig. 3 is an exploded view of the integration of the tracker and battery as well as the bicycle frame according to an embodiment of the present invention.
Fig. 4 is a perspective view of the integration of the tracker and battery according to an embodiment of the present invention.
Fig. 5 is an exploded view of the tracker and battery according to an embodiment of the present invention.
Fig. 6 is another perspective view of the integration of the tracker and battery according to an embodiment of the present invention.
Fig. 7 is an exploded view of the tracker and battery in Fig. 6.
Fig. 8 is a side view of the integration of the tracker and battery according to an embodiment of the present invention.
Fig. 9 is a I-I sectional view of Fig. 8.
Fig. 10 is a II-II sectional view of Fig. 8.
Fig. 11 is a III-III sectional view of Fig. 8.

### DETAILED DESCRIPTION OF THE PREFERRED EMBODIMENTS

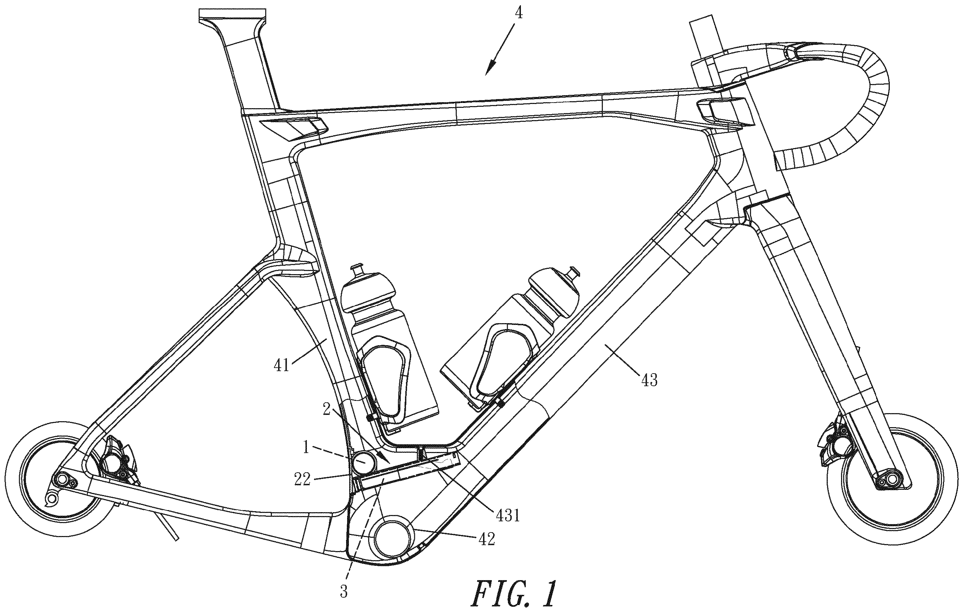

Referring to Figs. 1~3, the tracker 1 is fixed inside an embedding seat 20 of a holder 2, the holder 2 further connected with a battery 3 through a combination device 21, which enables the tracker 1 and battery 3 to be integrated. The tracker 1 and battery 3 are integrated and then embedded into a placing chamber 40 configured on the frame 4 of a bicycle.

The above-mentioned tracker 1 can be an AirTag by Apple Inc. or a tracker having any other tracking function, capable of fining the location of the bicycle through the APP. When the bicycle rider fails to find the bicycle, the APP displays and guides the bicycle rider direction to the location thereof and achieves the effect of finding the bicycle.

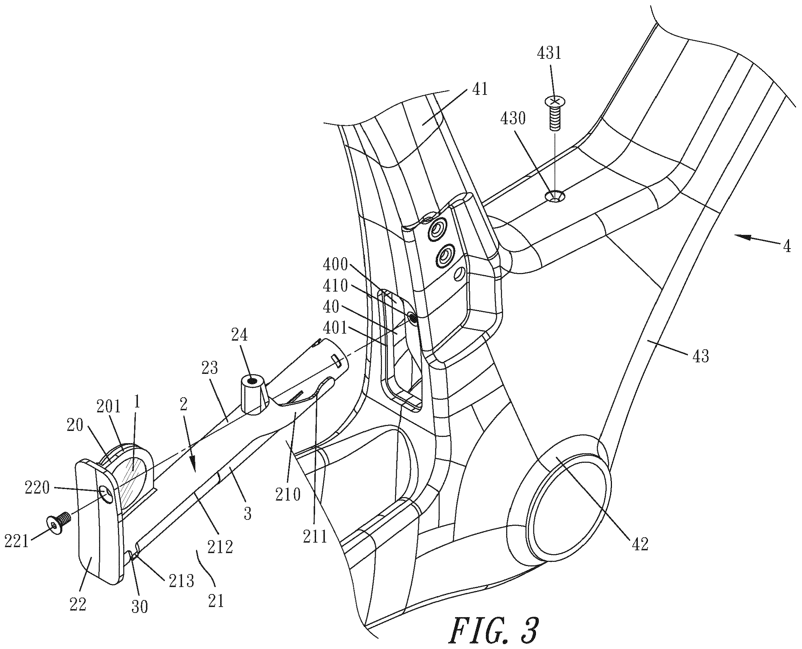

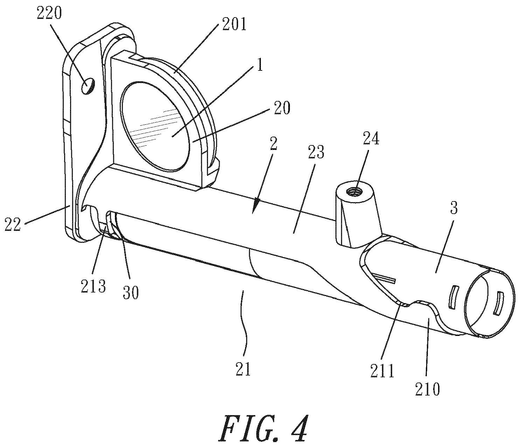

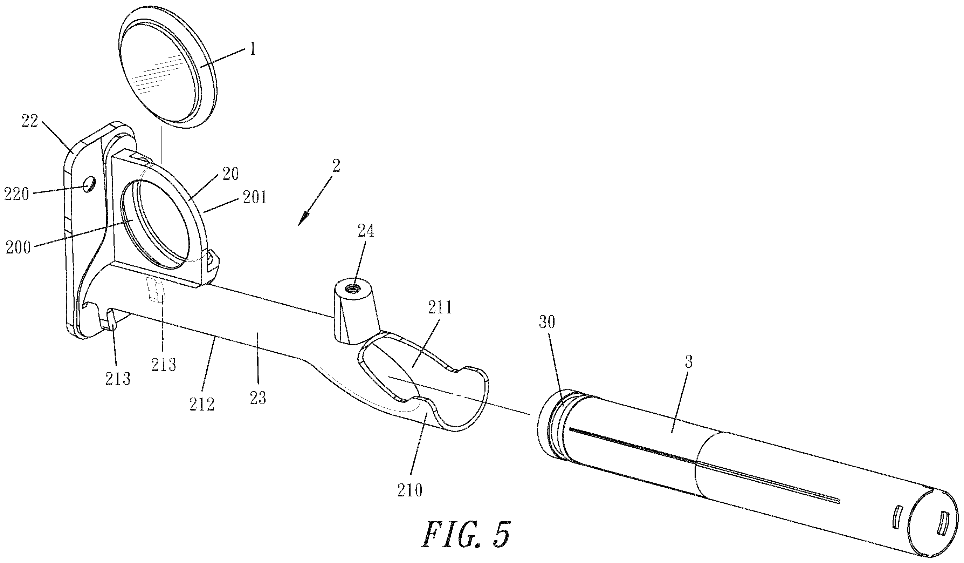

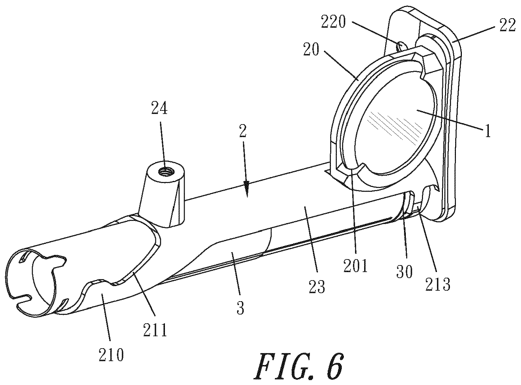

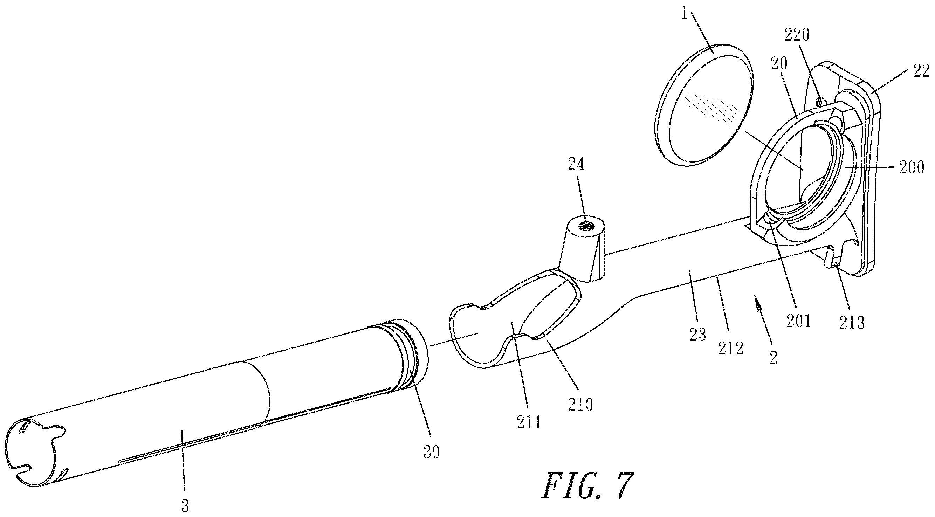

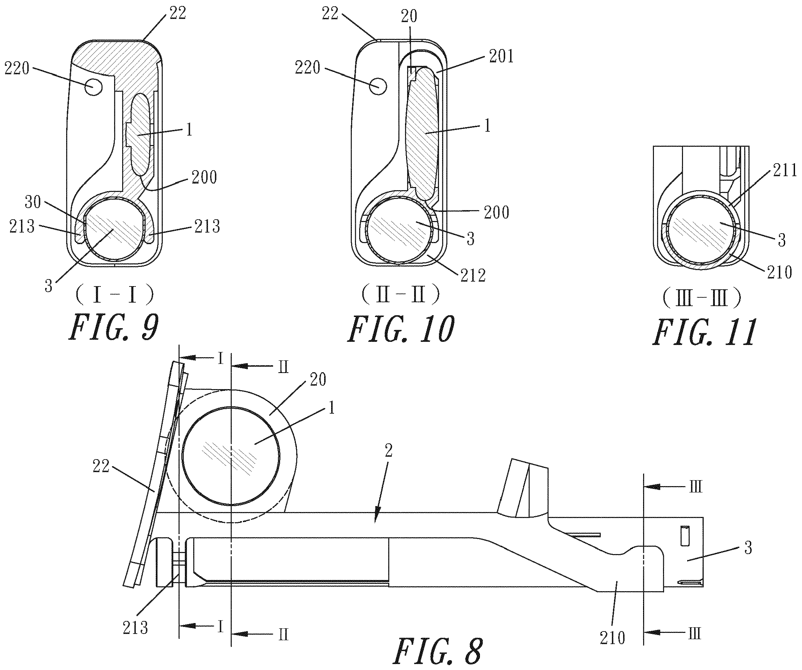

Referring to Figs. 4~7, one end of the holder 2 is configured with a cover plate 22, the plate surface of one end of the cover plate 22 is connected with a carrier 23, wherein the carrier 23 is connected with the battery 3 through the combination device 21. The carrier 23 is in the shape of a tube, with its inner diameter matching the outer diameter of the battery 3, a tube part 210 having a circle of tube wall is configured on the tail end, and the tube part 210 has a section of upper notch 211 on the top end of the carrier 23 (as shown in Fig. 11). The carrier 23 has an opening 212 extending axially from the bottom between the cover plate 22 and the tube part 210 (as shown in Figs. 3, 5, 7, 10), the two opposite opening edges of the opening 212 close to the end of the cover plate 22 are respectively configured with an opposite holding arm 213 to surround the recessed neck 30 on the corresponding ends of the outer wall of the battery 3 (as shown in Figs. 5, 9) so that to prevent the axial movement of the battery 3. Therefore, two crossing arms 213 and the tube part 210 are installed through the combination device 21 and two ends of the battery 3 are fixed below the carrier 23. The configuration of the upper notch 211 and the opening 212 enables the battery 3 to be removed from the carrier 23, the battery close to the end of the over plate 22 is pulled down and disengaged from the surrounding of two holding arms 213 to slope downwardly, the tail end of the battery 3 is moving toward the top of the upper notch 211 and then, the battery 3 is pulled out. The replacement of the battery 3 can be operated in the manner. The embedding seat 20 is installed on the top end of the carrier 23 and closed to the position of the cover plate 22, wherein the embedding seat 20 comprising a circle of hollow shape having a circle of a concave clamping slot 200 on the hollow inner surface and a throwing opening 201 with a section notch-shaped defined on the upper section of the outer circle surface of the clamping slot 200 (as shown in Figs. 6, 7, 10). The throwing opening 201 enables the tracker 1 to be embedded and fixed inside the clamping slot 200 of the embedding seat 20 or be removed from the clamping slot 200. The top surface of the tail end of the carrier 23 is configured with a threaded hole 24.

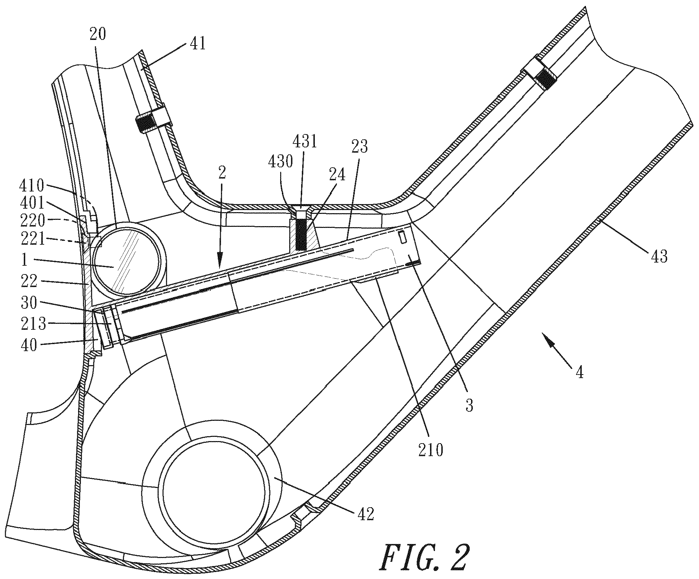

Referring to Figs. 2 and 3, the placing chamber 40 is installed inside the bottom end of the seat tube 41 of the bicycle frame 4 (that is, located inside the seat tube 41) and adjacent to the upper of the bottom bracket 42 of the bicycle frame 4. The placing chamber 40 has a placing opening 400 and the edge around the placing opening 400 is recessed a circle of a abutting surface 401 so that after the carrier of the frame 2 loaded with the battery 3 and tracker 1 is embedded to the placing chamber 40 from the placing opening 400, the periphery of the cover plate 22 is rested on the abutting surface 401. The plate surface of the cover plate 22 is configured with a through hole 220, enabling a screw 221 to pass through the through hole 220 and be screwed with a threaded hole 410 preset and match inside the seat tube 41, to fix the cover plate 22. Furthermore, the position of the top surface of the down tube 43 of the bicycle frame 4 corresponding to the threaded hole 24 has a through hole 430, passing through the through hole 430 through another screw piece 431 to screw with the threaded hole 24 and fixing the tail end of the carrier 23. Fixing the holder 2 in tandem via the two screw pieces 221, 431 enables the holder 2 to be firmly and stably hidden inside the placing chamber 40. Although the end surfaces of the two screw pieces 221, 431 are exposed outside the surface of the bicycle frame 4, the screws can use those hexagonal types or other special types that cannot be removed using an ordinary tool.

While in application, as shown in Figs. 4~7, the battery 3 and the tracker 1 are respectively mounted on the holder 2 to integrate and embed the battery 3 and the tracker 1 to the placing chamber 40 from the placing opening 400 (as shown in Fig. 3). The periphery of the cover plate 22 rests on the abutting surface 401, and then, a screw piece 431 is used to pass through the through hole 430 to be screw with the threaded hole 24, and another screw piece 221 passes through the through hole 220 to be screw with the threaded hole 410 to fix the two ends of the holder 2 and the cover plate 22. While replacing the battery 3 or the button cell of the tracker 1, removing the two screw pieces 221, 431 is capable of withdrawing the holder 2 for replacement. In addition, the power of the tracker 1 can be designed to be supplied by the battery 3 but not necessary to replace the button cell of the tracker 1.

The above-mentioned structure of the present invention relates to integrate the battery 3 and the tracker 1, comprising the following advantages and functional effects.
1. The holder 2 is utilized to integrate the battery 3 and the tracker 1 and install hiddenly them inside the bicycle frame 4 to prevent malicious damage. Moreover, only one single placing chamber 40 is required for placement, having the effect of easy assembly and installation.
2. Through the embedding seat 20 of the holder 2 and the configuration of the combination device 21 of the two holding arms 213 and the tube part 210 below the carrier 23, the tracker 1 and battery 3 are enabled to have a stable fixing position.
3. The configuration position of the tracker 1 and the battery 3 is at the gravity center below the middle part of the bicycle frame 4 above the bottom bracket 42, and thus, the installation of the tracker 1 and the battery 3 will not affect the balance of the bicycle frame 4.
4. The tracker 1 is designed to be installed above the battery 3 and enables to reduce the signal interference.

To conclude, the present invention is novel, practical and has an inventive step. Hence, pursuant to law, an application for utility model is hereby submitted. Your examination and approval will be highly appreciated.

## Claims

1. A tracker (1) and battery (3) integrated structure of a bicycle comprising a holder (2) provided with an embedding seat (20) for enabling the tracker (1) to be embedded and positioned, a bottom end of the holder (2) being configured with a combination device (21) to combine the battery (3), and through the holder (2), the tracker (1) and the battery (3) being integrated and embedded into a placing chamber (40) installed inside the tube of the bicycle frame (4) and positioned.

2. The tracker (1) and battery (3) integrated structure of the bicycle of claim 1, wherein one end of the holder (2) is configured with a cover plate (22), a plate surface of one end of the cover plate (22) is connected with a carrier (23), the carrier (23) is connected with the battery (3) through the combination device (21), and the carrier (23) is a tube shape with an inner tube diameter matching the outer diameter of the battery (3) and a tube part (210) with a circle of tube wall is configured at the tail end and the top end of the tube part (210) has a section of upper notch (211), and wherein the carrier (23) from the cover pater (22) to the bottom between the tube part (20) having an opening (212) axially extending, a corresponding holding arm (213) separately configured on the two opposite edges of the cover plate (22) end closed to the opening (212) to enfold the recessed neck on the outer wall of the battery (3) corresponding to the holding arms (213).

3. The tracker (1) and battery (3) integrated structure of a bicycle of claim 2, wherein the embedding seat (20) is installed on the top end of the carrier (23) and adjacent to the cover plate, the embedding seat (20) is a hollow shape and a circle of a concave clamping slot (200) is defined on the hollow inner surface, and the outer ring surface of the clamping slot (200) has a throwing opening (201) with a section notch-shaped.

4. The tracker (1) and battery (3) integrated structure of a bicycle of claim 1 or 2 or 3, wherein the placing chamber (4) is installed inside the bottom end of a seat tube (41) of the bicycle frame (4) and closed to the top of a bottom bracket (42) of the bicycle frame (4).

5. The tracker (1) and battery (3) integrated structure of a bicycle of claim 4, wherein the placing chamber (40) has a placing opening (400), the edge around the periphery of the placing opening (400) is recessing to form a circle of an abutting surface (401), the holder (2) carries the battery (3) and the tracker (1) and is embedded to the placing chamber (40) from the placing opening (400), and then, the periphery of the cover plate (22) is rested on the abutting surface (401).

6. The tracker (1) and battery (3) integrated structure of a bicycle of claim 5, wherein the plate surface of the cover plate (22) is configured with a through hole (220) enabling a screw piece (221) passing through the through hole (220) and then threaded with a thread hole (410) preinstalled and matched inside the seat tube (41), so as to fix the cover plate, and the top surface of the tail end of the carrier (23) is installed with another thread hole (24), the top surface of a down tube (43) has another through hole (430) at the position corresponding to the another thread hole (24) and the tail end of the holder (2) is fixed via another screw piece (431) to pass through another through hole (430) to thread with another thread hole (24).
